# EUROPEAN PATENT APPLICATION

(11) **EP 4 741 151 A1**
(43) Date of publication of application: **13.05.2026**
(21) Application number: 25214106.4
(22) Date of filing: 06.11.2025
(51) Int. Cl.: B32B 1/08, B32B 27/34, F16L 9/12

(54) **MULTILAYER PIPE FOR AN AIR CONDITIONING SYSTEM OF A MOTOR VEHICLE**

(30) Priority: 08.11.2024 IT 202400025182
(71) Applicant: HUTCHINSON S.r.l., 10090 Rivoli (TO) (IT)
(72) Inventor: ROSSI, Katia, 10093 COLLEGNO (TO) (IT); PARENTE, Giuseppe, 10146 TORINO (IT); HÉRAULT, Florence, 77690 Montigny Sur Loing (FR)
(74) Representative: Vitillo, Giuseppe

(57) **Abstract**

Pipe (10) for an air conditioning system of a motor vehicle; said pipe comprising: an inner tube (12), located in a radially internal position and configured to carry a fluid to be transported, wherein the inner tube (12) is made of one of the following materials: PA6/66, PA66, PA6T/66, PA6T/6, or EX1; an outer tube (14), located in a radially external position, wherein the outer tube (14) is made of polyamide having, in the repeating units of its macromolecules, a ratio between the number of CH2 methylene groups and the number of CONH amide groups greater than or equal to 8; wherein EX1 is a reactive thermoplastic composition, comprising a continuous phase of at least one thermoplastic polymer, and in which a discontinuous phase is dispersed which is based on at least one reactive reinforcing chemical agent.

## Description

### Technical field

The present invention relates to a multilayer pipe for an air conditioning system of a motor vehicle. The pipe is configured to transport a fluid circulating in the air conditioning system.

### Technical background

In the automotive field, the pipes currently being used for air conditioning systems are made of aluminium, possibly with a rubber tube. This solution can ensure product functionality, but has some drawbacks due to: heavy weight, poor vibration absorption, generally high cost, risk of permanent deformation. Moreover, the connections between the pipe's ends and the fittings must be made by brazing or cold-deformation, which are processes that require much energy.

US 2023/055055 A1 discloses a hose for transportation of refrigerant, which includes an inner layer, a reinforcing layer, and an outer layer. The inner and outer layers each include a thermoplastic resin composition having a sea-island structure including a matrix containing a thermoplastic resin and a domain containing an elastomer. The water vapour permeability coefficient of the thermoplastic resin composition of the outer layer, at a temperature of 60 °C and a relative humidity of 100%, is 10.0 g·mm/(m²·24 h) or less. The oxygen permeability coefficient of the thermoplastic resin composition of the inner layer, at a temperature of 21 °C and a relative humidity of 50%, is 0.05 cm³·mm/(m²·day·mmHg) or less. The water vapour permeation amount of the hose is 6.0 mg/(240 h·cm²) or less. The hydrofluoroolefin HFO-1234yf permeation amount of the hose is 170 g/(m²·72 h) or less, and the mass per 1 m² of the outer surface area of the hose if 3,000 g/m² or less.

### Summary of the invention

It is one object of the present invention to provide a pipe able to overcome the drawbacks of the prior art.

According to the present invention, this object is achieved through a pipe having the technical features set out in the appended independent claim.

In particular, such technical features result in a pipe with improved mechanical strength, which will maintain its insulating properties even after having been bent.

Another advantage lies in the fact that the pipe can be manufactured easily, quickly and economically, while ensuring good thermal insulation.

It is understood that the appended claims are an integral part of the technical teachings provided in the following detailed description of the present invention. In particular, the appended dependent claims define some preferred embodiments of the present invention that include some optional technical features.

Further features and advantages of the present invention will become apparent in light of the following detailed description, provided herein merely as a non-limiting example and referring, in particular, to the annexed drawings as summarized below.

### Brief description of the drawings

Figure 1 is a perspective view of a pipe made in accordance with an exemplary embodiment of the present invention.
Figure 2 is a perspective view of a pipe made in accordance with another exemplary embodiment of the present invention.

### Detailed description of the invention

With reference to the drawings, numeral 10 designates as a whole a pipe for an air conditioning system of a motor vehicle; said pipe 10 comprising:
- an inner tube 12, located in a radially internal position and configured to carry a fluid to be transported, wherein inner tube 12 is based on, in particular made of, one of the following materials: PA6/66, PA66, PA6T/66, PA6T/6, or "EX1" (which will be defined later on),
- an outer tube 14, located in a radially external position, wherein outer tube 14 is based on, in particular made of, polyamide having, in the repeating units of its macromolecules, a ratio between the number of CH2 methylene groups and the number of CONH amide groups greater than or equal to 8.

For example, pipe 10 can be used in a motor vehicle, like a car. In particular, pipe 10 may find application in an air conditioning system of a motor vehicle, particularly for high-pressure liquid lines.

Inner tube 12 is configured to carry a fluid to be transported, in particular a refrigerant fluid, such as refrigerant liquid or refrigerant gas. The coolant fluids that can flow in inner tube 12 may be per se known. Inner tube 12 has low permeability to gases (e.g. R-1234YF, R134a, R290, or R744) used in air conditioning circuits, thus limiting the dispersion thereof in the outside environment. PA6/66, PA66, PA6T/66, or PA6T/6, which are the materials that inner tube 12 is made of, are particular types of polyamide.

Preferably, inner tube 12 is based on, in particular made of, PA6/66. This material offers a particularly satisfactory level of impermeability to gases used in air conditioning circuits.

According to some preferred variants of the invention, inner tube 12 is based on, in particular made of, the material defined by any one of claims 11-16 of patent EP 2415824 B1, or the material defined by any one of claims 13-24 of patent FR 2963624 B1. For example, inner tube 12 is based on, in particular made of, the material obtained from one or more of the methods described and/or claimed in said patent EP 2415824 B1 or in said patent FR 2963624 B1. The contents of EP 2415824 B1 or FR 2963624 B1 are wholly incorporated in the present description and will not be repeated herein for brevity's sake.

In particular, inner tube 12 is based on, in particular made of, the following material, which will be called "EX1" for brevity:
a reactive thermoplastic composition, comprising a continuous phase based on at least one thermoplastic polymer, and in which a discontinuous phase is dispersed which is based on at least one reactive reinforcing chemical agent, wherein said reactive reinforcing chemical agent may be immiscible with said at least one thermoplastic polymer, and wherein said reinforcing chemical agent is selected from the group including epoxy resins, polyorganosiloxanes having SiH functional group(s), diisocyanates or polyisocyanates, and mixtures thereof; such thermoplastic composition is free of any compatibilizing agents between the continuous phase and the discontinuous phase, and comprises the product of an in situ grafting, branching and/or crosslinking reaction, wherein such product is obtained by reactive mixing of said continuous and discontinuous phases at a shear rate greater than 10² s⁻¹, and preferably greater than or equal to 10³ s⁻¹; said product of the in situ reaction between said reactive reinforcing agent and the polymeric chains of said at least one thermoplastic polymer is such that the latter has a grafted, branched or crosslinked structure, and that the discontinuous phase is homogeneously dispersed in the continuous phase. Preferably, the discontinuous phase is in the form of nodules having an average number size smaller than 5µm. Preferably, the average number size is between 2µm and 5µm, with a maximum standard deviation of 0.5µm.

More specifically, inner tube 12 is made of the following material, which will be called "EX2" for brevity:
said "EX1" material, wherein said at least one thermoplastic polymer is selected from the group including homopolymers and copolymers of olefins, aliphatic, semi-aromatic and aromatic polyamides of the polyphthalamide type, polyimides (PI), polyamide-imides (PAI), polyetherimides (PEI), thermoplastic elastomers (TPE), polyphenylsulfones, polyethersulfones (PES), polystyrenes (PS), polysulfones (PSU), polyesters, ethylene polyoxides and other olefin-based monomers, polyether ether ketones (PEEK), polyether ketones (PEK), polyetherketoneketone (PEKK), block copolymers of the same, and mixtures thereof. Preferably, said at least one thermoplastic polymer is selected from the group including polypropylenes, propyleneethylene copolymers, propylene-hexene, ethylene-butene and ethylene-octene, polyethylenes, copolyesters (COPE), polyether block amides (PEBA), thermoplastic polyurethanes, polyamides 6, 4.6, 6.6, 6.6.6, 11, 12, block copolymers of the same, and mixtures thereof.

More specifically, inner tube 12 may be made of the following material, which will be called "EX3" for brevity:
said "EX2" material, wherein said discontinuous phase is based on at least one epoxy resin, and preferably on an amide crosslinking system with or without an acrylated or methacrylated amide block agent. Said continuous phase, in particular said at least one thermoplastic polymer, is selected from the group including aliphatic, semi-aromatic and aromatic polyamides of the polyphthalamide type. Preferably, said at least one thermoplastic polymer is selected from the group including polyamides 6, 4.6, 6.6, 6.6.6, 11, 12, block copolymers of the same, and mixtures thereof.

Material EX3 is a particular example of the more generic material EX2. Material EX2 is a particular example of the more generic material EX1. Consequently, material EX3 is a particular example of the more generic material EX1. Therefore, inner tube 12 may be made of PA6/66, PA66, PA6T/66, PA6T/6, EX1, EX2, or EX3.

Such materials EX1, EX2, or EX3 have a particularly satisfactory impermeability to gases used in air conditioning circuits.

According to some possible embodiments, EX1 or EX2 or EX3 contain PA6 and PA66. In such cases, therefore, inner tube 12 is made of EX1 containing PA6 and PA66, or made of EX2 containing PA6 and PA66, or made of EX3 containing PA6 and PA66. This material ensures high impermeability to gases used in air conditioning circuits.

Advantageously, when the ratio between the number of CH2 groups and the number of CONH groups of the repeating units of a polymer is greater than or equal to 8, there is good resistance to zinc chloride ZnCl₂. Preferably, the ratio between the number of CH2 groups and the number of CONH groups is greater than 8. As a matter of fact, outer tube 14 may, in operation, come in contact with zinc chloride, which is a molecule formed by interaction between salt deposited on roads for snow melting purposes and metal components of cars. Furthermore, outer tube 14 has low permeability to moisture (in particular, to water vapour). In fact, any moisture entering pipe 10 may cause damage to a compressor of an air conditioning system.

According to some preferred embodiments, outer tube 14 is based on, in particular made of, one of the following materials: PA610, PA612, PA12, PA11, PA1012, or PA10T. Such materials, which are particular types of polyamide, have very good resistance to zinc chloride.

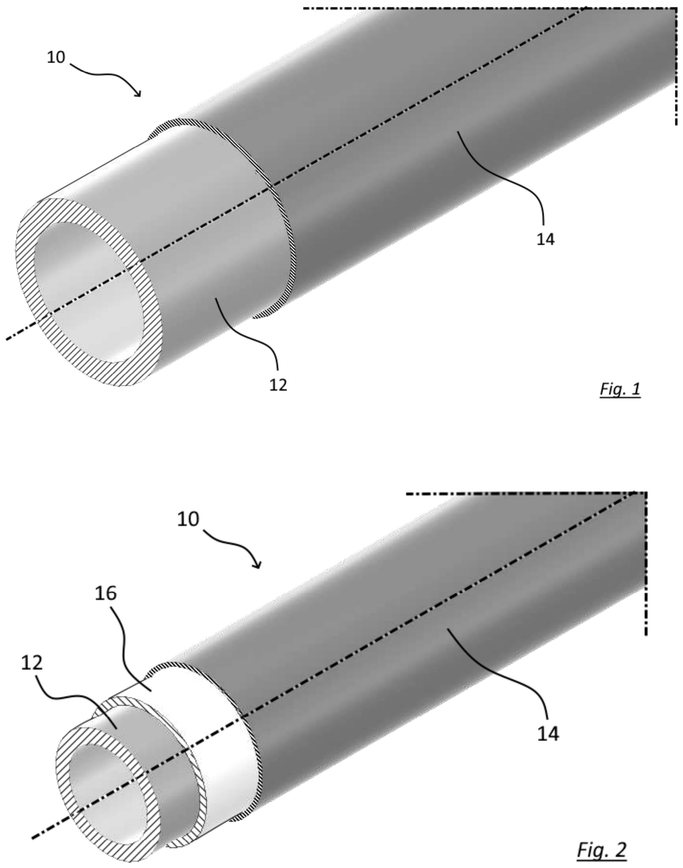

With reference to the variant of Figure 2, pipe 10 comprises at least one intermediate tube 16, radially interposed between inner tube 12 and outer tube 14. In the illustrated example there is only one intermediate tube 16. In particular, intermediate tube 16 is in contact with both outer tube 14 and inner tube 12. According to some possible variants, between inner tube 12 and outer tube 14 there are a plurality of intermediate tubes 16. The at least one intermediate tube 16 is useful to improve the mechanical properties, or the thermal insulation, or the gas impermeability of pipe 10.

Intermediate tube 16 is preferably made of polymeric material, e.g. EVOH (ethylene vinyl alcohol copolymer). Preferably, intermediate tube 16 is made of a material with low gas permeability, such as EVOH. According to some possible variants, intermediate tube 16 is made of a material, preferably a polymeric one, which is able to improve the adhesion between outer tube 14 and inner tube 12.

In the example, pipe 10 has a circular cross-section. In particular, tubes 12, 14, as well as any intermediate tubes 16, have a circular cross-section.

In particular, tubes 12, 14, as well as any intermediate tubes 16, are smooth, particularly on their external and internal parts.

Preferably, there are no other elements, tubes, or layers radially internal to inner tube 12.

In the example of Fig. 1, the thickness of inner tube 12 is greater than (in particular, at least twice) the thickness of outer tube 14. In the example of Fig. 2, the thickness of inner tube 12 is greater than (in particular, at least twice) the thickness of outer tube 14, and is greater than (in particular, at least twice) the thickness of intermediate tube 16.

In particular, there are no gaps between tubes 12, 14, and, optionally, 16 of pipe 10.

In the preferred embodiments shown and described herein, all tubes 12, 14, and, optionally, 16 of pipe 10 are made of polymeric material. Advantageously, multiple pipes 10 can thus be welded to each other, and such welding is an economical process that requires little energy.

Preferably, pipe 10 is configured to withstand an internal fluid pressure of at least 150 bar at room temperature (20 to 25 °C) and at least 62 bar at 125 °C.

Pipe 10 of the invention finds application in the automotive, aircraft, heavy-truck, and marine fields, and can be used for fluid transfer applications using pumps or compressors, or generally in any system using pressurized fluids for an internal combustion, hybrid, or electric engine.

For example, pipe 10 is manufactured by simultaneously extruding inner tube 12 and outer tube 14, as well as, if present, intermediate tube 16.

The invention also concerns a system for transporting a fluid, comprising:
- a pipe 10 according to any variant; and
- a fluid source configured to supply a fluid to be transported, and fluidically connected to inner tube 12 of pipe 10.

The invention also concerns an air conditioning system for a motor vehicle, comprising a pipe 10 according to any variant.

The invention also concerns a motor vehicle comprising said air conditioning system.

The invention also concerns a method for making a pipe 10 according to any embodiment thereof, comprising the steps of simultaneously extruding both inner tube 12 and outer tube 14. The characteristics of tubes 12, 14 will not be repeated for brevity's sake. Optionally, the at least one intermediate tube 16 (if present) is extruded simultaneously with inner tube 12 and outer tube 14.

Naturally, without prejudice to the principle of the invention, the forms of embodiment and the implementation details may be extensively varied from those described and illustrated herein by way of non-limiting example, without however departing from the scope of the invention as set out in the appended claims.

## Claims

1. Pipe (10) for an air conditioning system of a motor vehicle; said pipe comprising:
- an inner tube (12), located in a radially internal position and configured to carry a fluid to be transported, wherein the inner tube (12) is made of one of the following materials: PA6/66, PA66, PA6T/66, PA6T/6, or EX1,
- an outer tube (14), located in a radially external position, wherein the outer tube (14) is made of polyamide having, in the repeating units of its macromolecules, a ratio between the number of CH2 methylene groups and the number of CONH amide groups greater than or equal to 8;
wherein EX1 is the following material:
a reactive thermoplastic composition, comprising a continuous phase based on at least one thermoplastic polymer, and in which a discontinuous phase is dispersed which is based on at least one reactive reinforcing chemical agent, wherein said reactive reinforcing chemical agent may be immiscible with said at least one thermoplastic polymer, and wherein said reinforcing chemical agent is selected from the group including epoxy resins, polyorganosiloxanes having SiH functional group(s), diisocyanates or polyisocyanates, and mixtures thereof; wherein such thermoplastic composition is free of any compatibilizing agents between the continuous phase and the discontinuous phase, and comprises the product of an in situ grafting, branching and/or crosslinking reaction, wherein such product is obtained by reactive mixing of said continuous and discontinuous phases at a shear rate greater than 10² s⁻¹; said product of the in situ reaction between said reactive reinforcing agent and the polymeric chains of said at least one thermoplastic polymer is such that the latter has a grafted, branched or crosslinked structure, and that the discontinuous phase is homogeneously dispersed in the continuous phase.

2. Pipe according to claim 1, wherein the outer tube (14) is made of one of the following materials: PA610, PA612, PA12, PA11, PA1012, or PA10T.

3. Pipe according to claim 1 or 2, wherein the inner tube (12) is made of PA6/66.

4. Pipe according to claim 1 or 2, wherein the inner tube (12) is made of EX1.

5. Pipe according to claim 4, wherein the inner tube (12) is made of the following material called EX2:
said EX1 material, wherein said at least one thermoplastic polymer is selected from the group including homopolymers and copolymers of olefins, aliphatic, semi-aromatic and aromatic polyamides of the polyphthalamide type, polyimides (PI), polyamide-imides (PAI), polyetherimides (PEI), thermoplastic elastomers (TPE), polyphenylsulfones, polyethersulfones (PES), polystyrenes (PS), polysulfones (PSU), polyesters, ethylene polyoxides and other olefin-based monomers, polyether ether ketones (PEEK), polyether ketones (PEK), polyetherketoneketone (PEKK), block copolymers of the same, and mixtures thereof.

6. Pipe according to any one of the preceding claims, comprising at least one intermediate tube (16), radially interposed between the inner tube (12) and the outer tube (14).

7. Pipe according to claim 6, wherein said intermediate tube (16) is made of EVOH.

8. Pipe according to any one of the preceding claims, wherein the thickness of the inner tube (12) is greater than the thickness of the outer tube (14).

9. Pipe according to claim 5, wherein the inner tube (12) is made of the following material called EX3:
said EX2 material, wherein said discontinuous phase is based on at least one epoxy resin, and preferably on an amide crosslinking system with or without an acrylated or methacrylated amide block agent; wherein said continuous phase is selected from the group including aliphatic, semi-aromatic and aromatic polyamides of the polyphthalamide type.

10. Air conditioning system for a motor vehicle, comprising a pipe (10) according to any one of the preceding claims.

11. Motor vehicle comprising an air conditioning system according to claim 10.

12. Method for making a pipe (10) according to any one of claims 1 to 9, comprising the steps of simultaneously extruding both the inner tube (12) and the outer tube (14).
